# EUROPEAN PATENT APPLICATION

(11) **EP 2 418 744 A1**
(43) Date of publication of application: **15.02.2012**
(21) Application number: 11176956.8
(22) Date of filing: 09.08.2011
(51) Int. Cl.: H01R 13/506, H01R 13/523, H02G 15/113

(54) **Seal device for sealing a connector**

(30) Priority: 10.08.2010 CN 201020289608 U
(71) Applicant: Tyco Electronics (Shanghai) Co., Ltd., Waigaoqiao Free Trade Zone Shanghai (CN)
(72) Inventor: Yin, Hongjun, Waigaoqiao Free Trade Zone (CN)
(74) Representative: Grünecker, Kinkeldey, Stockmair & Schwanhäusser

(57) **Abstract**

A seal device for sealing a connector (6), comprising: a first casing (1) including a first engagement edge; a second casing (2) including a second engagement edge, wherein the second casing and the first casing are engaged with each other at the first and second engagement edges to form an inner chamber for receiving a connector, wherein the first casing further includes a first connection portion (11) extending from the first engagement edge, and the second casing further includes a second connection portion extending (21) from the second engagement edge, wherein the first and second connection portions are detachably connected so that the connector is sealed in the inner chamber by the first casing and the second casing. With the above configuration, the cost for manufacturing the seal device is low, and the operation thereof is convenient.

## Description

This application claims the benefit of Chinese Patent Application No. 201020289608.8 filed on August 10, 2010 before the State Intellectual Property Office of China, the disclosure of which is incorporated herein by reference.

### BACKGROUND OF THE INVENTION

### Field of Invention

The present invention relates to a seal device, particularly to a fast seal device applied to a connector used in a communication network.

### Description of the Related Art

Cable connectors, feeder connectors, optical fiber connectors or a DIN (Deutsche Industrie Norm) Connectors all require waterproof sealing, and in some cases, it is required to meet the highest sealing standard, i.e., IP68. IP level stands for ingress protection level, and different IP levels indicate different levels of the ability of an instrument in preventing impurity ingress. The IP level system is established by International Electrotechnical Commission, IEC) as an IEC standard 529 to provide instructions regarding the protection of an instrument. One IP level is constituted of two numbers, each indicating one kind of characteristic. A specific IP level represents a degree that ingress of impurities, such as moisture and dust can be prevented. The larger the number is, the better a protection performance is represented. The first IP number relates to particulate ingress, that is, it indicates a protection degree against solid impurities. For example, level 5 indicates the product can protect against the ingress of dust and other foreign substance with a diameter bigger than 1.0 mm. The highest level for the first IP number is 6, which means dust ingress is completely prevented.

The second IP number represents the moisture-proof level, for example level 4 indiates that ingress of water from any direction can be prevented. The highest level for the second number is 8, which indicates that protection is against long-term water immersion.

Hence, IP68 represents the highest protection level in the IP level system.

However, many seal devices in the prior art do not meet the requirements under IP68. Specifically, in the case that the seal devices have been used for a long term, connection circuits tend to be affected by the damp and thus the connection performance of the connection circuits is degraded. Therefore, the existing seal devices can not meet the sealing requirement for products being used outdoor for a long time.

In the market, the existing seal device reaching the level of IP68 comprises two separate members, one is a sealing body, the other is a hook, a spring or a screw separated from the sealing body. In the sealing process, a connector to be sealed is first wrapped by a sealing body, and then the sealing body is fixed to a connector by a hook, a spring or a screw to seal the connector. The disadvantages of the above seal device lie in that: because the seal device comprises two separate members, the operation thereof is inconvenient, and the installation efficiency thereof is low. In addition, if the screw is small, it tends to be lost during disassembling and assembling the seal device. Further, manufacturing the attachment of the seal device, such as the hook, the spring or the screw, needs additional molding and a separate machine, which results in a higher manufacturing cost.

### Summary of Invention

The present invention has been made to overcome or alleviate at least one aspect of the above mentioned disadvantages.

Accordingly, an object of present invention is to provide a seal device for sealing a connector, the seal device provides a protection level of IP68. Moreover, the cost for manufacturing the seal device is low, and the operation thereof is convenient.

According to one aspect of present invention, a seal device for sealing a connector comprises: a first casing including a first engagement edge; a second casing including a second engagement edge, wherein the second casing and the first casing are engaged with each other at the first and second engagement edges to form an inner chamber for receiving a connector, and wherein the first casing further includes a first connection portion extending from the first engagement edge, and the second casing further includes a second connection portion extending from the second engagement edge, wherein the first and second connection portions are detachably connected in a way that the first casing and the second casing seal the connector in the inner chamber.

In the above seal device, the first connection portion and the second connection portion may be detachably connected in a snap-fit manner.

In the above seal device, the first connection portion comprises a male member, and the second connection portion comprises a female member, wherein the male member is adapted to be inserted into the female member in a detachable manner.

Further, the female member is a frame having a hole therein, and an end of the male member is provided with a fixing retainer, wherein when the male member is inserted into the hole in the frame, the fixing retainer holds the male member in the frame.

In the above seal device, the fixing retainer has a stop surface substantially perpendicular to the inserting direction of the male member.

Further, the fixing retainer has a cross section substantially in a right-angled triangle shape.

In the above seal device, the male member is elastic.

In the above seal device, a first side of the first casing and a first side of the second casing are integrally formed and connected in a rotatable way; and the first engagement edge and the second engagement edge are formed respectively at second sides of the first and second casings opposite to the first sides.

In the above seal device, each of the first casing and the second casing is formed therein a cavity; each of the first casing and the second casing is formed with two arc recesses respectively at a third side and a fourth side of the first casing and the second casing, wherein the third side and a fourth side are perpendicular to the first and second sides, when the first casing and the second casing are closed, the cavities of the first and second casings are engaged to form the inner chamber for receiving the connector, and the corresponding arc recesses are engaged to form O-shaped openings for introducing spliced cables.

In the above seal device, arc elastic sealing pieces are installed at the arc recesses of the first and second casings respectively.

In the above seal device, the first casing and the second casing further comprise first elastic sealing pieces and second elastic sealing pieces respectively, and both the first elastic sealing pieces and the second elastic sealing pieces respectively protrude above the arc recesses provided at both sides of the first and second casings.

Alternatively, in the above seal device, the first connection portion comprises an extending piece extending perpendicularly from the first engagement edge, the extending piece being provided with a protrusion extending inwards; the second connection portion comprises a groove extending inwards from an outer side of the second engagement edge; the protrusion is configured to fit with the groove so that the protrusion is engaged within the groove when the first and second casings are closed.

With the above configuration according to the present invention, at least one of the following technical effects is obtained:
the seal device is a one-piece member rather than a two-piece member, thus, additional molding is not needed, and the manufacturing process thereof is simplified and the manufacturing cost is reduced;
no additional details are used for fastening, and with a snap-fit manner, the sealing operation is performed with convenience and high efficiency.

### Brief Description of the Drawings

These and/or other aspects and advantages of the invention will become apparent and more readily appreciated from the following description of the embodiments, taken in conjunction with the accompanying drawings of which:
Fig. 1 is a perspective view of a seal device for sealing a connector according to an exemplary embodiment of the present invention, in which the seal device is in an opened state;
Fig. 2 is a side view of a seal device for sealing a connector according to an exemplary embodiment of the present invention, in which the seal device is in an opened state;
Fig. 3 is a top view of a seal device for sealing a connector according to an exemplary embodiment of the present invention, in which the seal device is in an opened state;
Fig. 4 is a side view of a seal device for sealing a connector according to an exemplary embodiment of the present invention, in which the seal device is in closed state; and
Fig. 5 is an exploded view of a seal device for sealing a connector according to an exemplary embodiment of the present invention.

### Detailed Description of Preferred Embodiments

Preferred embodiments of the present invention will be described hereinafter in detail with reference to the attached drawings, wherein the like reference numerals refer to the like elements throughout the specification. These embodiments should not be construed as being limited to the embodiment set forth herein, rather for illustrative purpose.

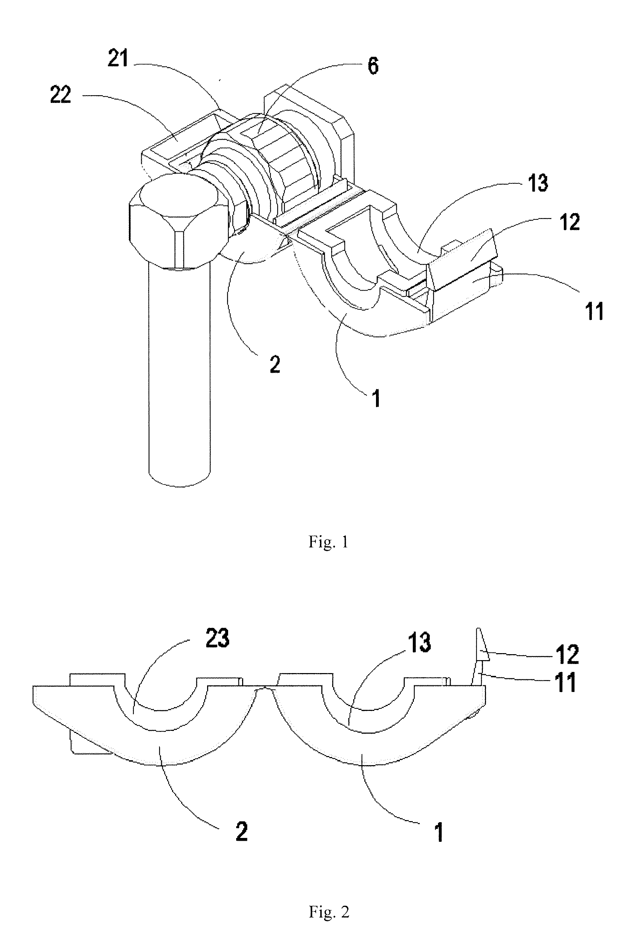

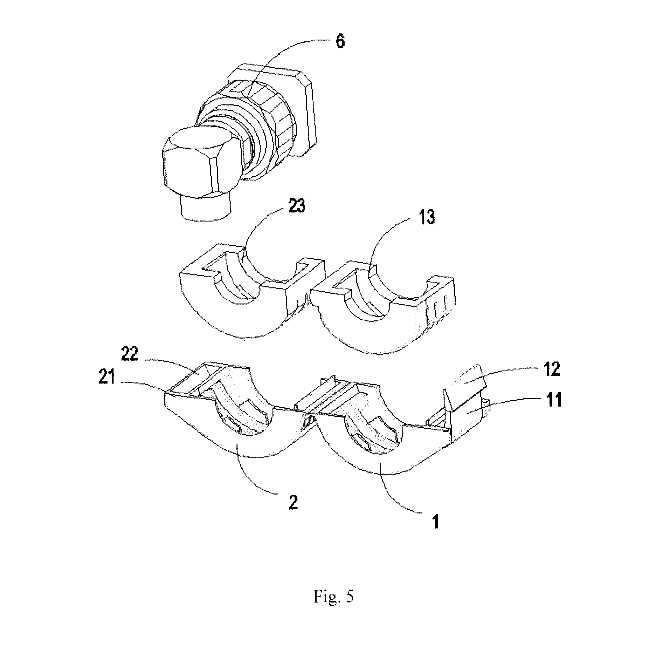

Referring to Figs. 1-5, a seal device for sealing a connector for a cable, a feeder, an optical fiber or a DIN connector and the like is shown, the seal device comprises: a first casing 1 including a first engagement edge; a second casing 2 including a second engagement edge, the second casing and the first casing being engaged with each other at the first and second engagement edges to form an inner chamber for receiving the connector 6 of spliced cables, wherein the first casing 1 further includes a first connection portion 11 extending outwardly from the first engagement edge, and the second casing 2 further includes a second connection portion 21 extending outwardly from the second engagement edge, the first and second connection portions 11 and 21 being detachably connected so that the first casing 1 and the second casing 2 seal the connector 6 in the inner chamber.

Please be noted that though in the exemplary embodiments the cables are spliced, those skilled in the art will appreciate that the present invention can also be applied to the connector for splicing optical fibers, feeders or a DIN connector and the like.

In an alternative embodiment of the present invention, the first connection portion I I and the second connection portion 21 are detachably connected, therefore, the first connection portion 11 and the second connection portion 21 may be disconnected or disengaged later by a corresponding operation without breaking structures of first and second connection portions.

According to an exemplary embodiment of the present invention, the first connection portion 11 and the second connection portion 21 are detachably connected in a snap-fit manner. Further, the first connection portion 11 comprises a male member extending perpendicularly from the first engagement edge, and the second connection portion 21 comprises a female member extending perpendicularly from the second engagement edge, wherein the male member is adapted to be inserted into the female member and be detachably fastened in the female member in a snap-fit manner.

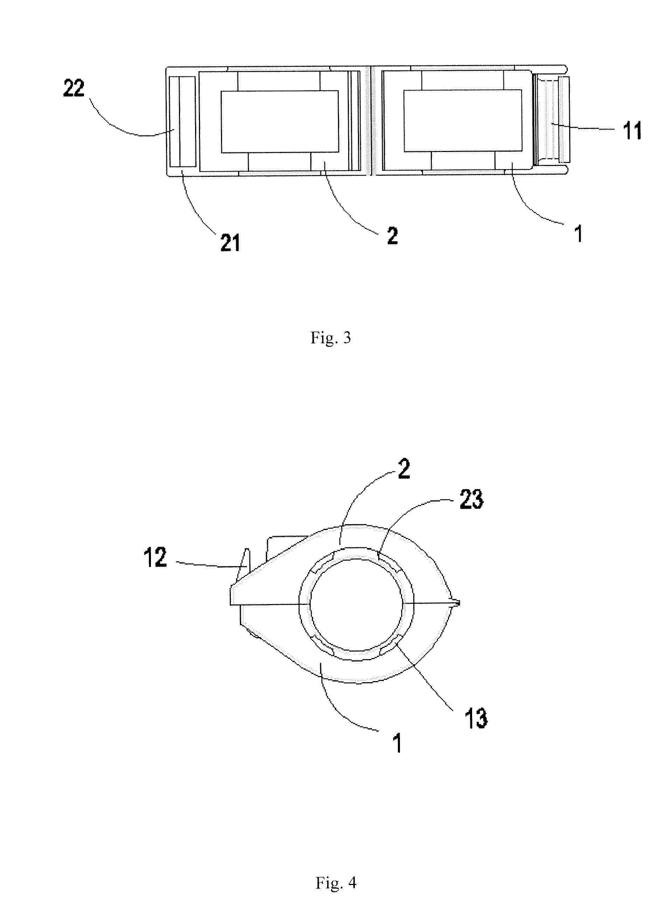

In a further exemplary embodiment of the present invention, the female member is a frame having a hole 22 therein, the male member has a little elasticity, and an end of the male member is provided with a fixing retainer 12, wherein when the male member is inserted into the frame, the fixing retainer 12 holds the male member in the frame. The fixing retainer 12 has a stop surface substantially perpendicular to an inserting direction of the male member. As shown in Fig. 2, the fixing retainer 12 has a cross section substantially in a right-angled triangle shape, thus, the fixing retainer 12 is a triangular protrusion projecting outwards when viewed from a side. In this case, when the male member of the first connection portion 11 is inserted into the hole 22 in the frame, the fixing retainer 12 having a triangular protruding shape first passes through the frame 21, and an outer inclined plane thereof guides the male member into the hole 22 in the frame with the male member being pressed inwards by an inner wall of the hole. When the fixing retainer 12 has completely passed through the frame, an elastic force of the male member makes the fixing retainer 12 spring outwards and thus be snapped to the frame, and therefore the male member is retained within the frame. In order to open the first casing 1 and the second casing 2, the male member extending out of the frame 21 (see Fig. 4) may be pressed so that the fixing retainer 12 having a triangular protruding shape disengages with a lower edge of the frame, and thus the first casing 1 is released from the second casing 2, in this case, the first and second casings 1 and 2 may be opened.

According to an exemplary embodiment of the present invention, the first and second casings are made of, for example, engineering plastic material. A first side of the first casing 1 and a first side of the second casing 2 are integrally formed, and a connection part between the first and second casings at the first sides may be thinner than other parts of the first and second casings, thus, the first and second casings may be turned with respect to the first side. The first engagement edge and the second engagement edge are formed respectively at second sides of the first and second casings opposite to the first sides.

Further, each of the first casing and the second casing has a substantially vaulted profile and forms therein a cavity; each of the first casing and the second casing forms two arc recesses respectively at a third side and a fourth side perpendicular to the first and second sides, wherein when the first casing 1 and the second casing 2 are closed, the cavities of the first and second casings 1 and 2 are engaged together to form the inner chamber for receiving the connector 6, and the corresponding arc recesses are engaged together to form substantially O-shaped openings for introducing spliced cables, the O-shaped openings being communicated with the inner chamber.

During being sealed, the connector 6 is placed in advance in the cavity of the second casing 2, then the first casing 1 and the second casing 2 are engaged, and two ends of the connector 6 (or two spliced cables) pass through the openings formed by paired arc recesses at the third and fourth sides of the sealing device. First arc elastic sealing pieces 13 and second arc elastic sealing pieces 23 are provided respectively at the arc recesses of the first and second casings 1 and 2, and specifically, for example, are provided at edge portions of the cavities of the first and second casings. Both the first arc elastic sealing pieces 13 and second arc elastic sealing pieces 23 protrude above the arc recesses provided at both sides of the first and second casings. In this case, during sealing, the elastic sealing pieces may be compressed to press the cables (or two ends of the connector 6) passing through the openings to seal the connector. The first and second elastic sealing pieces 13 and 23 may be made from elastic material, such as gel or rubber.

The male member of the first connection portion 11 extends downwards and is perpendicular to a bottom surface of the first casing 1, and the female member used as the frame extends laterally and in parallel with the bottom surface of the second casing 2. For sealing, the male member is inserted perpendicularly into the hole 22 in the female member and is detachably engaged within the hole 22 so that the connector 6 is held in a sealed state.

The engineering plastic used for the casings of the present invention may comprise PP, PBT, PC, PAT, PA66 or the like, and PP is preferred.

The sealing device according to the present invention may be formed integrally, that is, the seal device is a one-piece member rather than a two-piece member, thus, additional molding is not needed, no additional details are used for fastening, and therefore the manufacturing process and operation thereof are simplified.

Next, the operation of the sealing device according to the present invention will be described as follows:

First, the first casing 1 and the second casing 2 are opened with respect to the thinner connection part, then the connector 6 to be sealed is arranged in the cavity of the second casing, and two ends (or two spliced cables) of the connector 6 are fit in the arc recesses at the third and fourth sides of the second casing 2.

Second, the first casing 1 and the second casing 2 are folded along the thinner connection part and closed, and the male member is inserted into the female member; and when the fixing retainer 12 enters the hole 22 in the frame, the fixing retainer 12 springs outwards such that the male member is fixed in the hole 22 in the frame. At the same time, the elastic sealing pieces 13 and 23 are pressed against the two ends of the connector 6, thus, the connector 6 may be sealed for a long time.

The first side of the first casing 1 and the first side of the second casing 2 may be connected in other turnable manner, such as by hinge, pivot or pin or the like.

In another embodiment of the present invention, the first casing 1 and the second casing 2 may be separated, for example, both the first and second sides of the first and second casings 1 and 2 are respectively provided with the first connection portion 11 and the second connection portion 12, and when sealing, the first connection portions 11 and the corresponding second connection portions 12 at the first and second sides of the first and second casings 1 and 2 are connected and fixed together respectively, in this case, the first casing and the second casing are closed in a sealed state.

In the above mentioned exemplary embodiments of the present invention, the first connection portion 11 comprises the male member, and the second connection portion 12 comprises the female member, and thus the first and second casings 1 and 2 are connected together in a snap-fit manner. However, the present invention is not limited to this. Those skilled in the art will appreciate that the first and second casings 1 and 2 may be releaseably engaged with each other in other snap-fit manner. For example, in an alternative exemplary embodiment, the first connection portion 11 comprises an extending piece extending perpendicularly from the first engagement edge, the extending piece being provided with a protrusion extending inwards; the second connection portion 21 comprises a groove extending inwards from an outer side of the second engagement edge; when the first and second casings 1 and 2 are closed, the protrusion is engaged within the groove in a snap-fit manner so that the first and second casings 1 and 2 are detachably engaged with each other. Further, in the above alternative embodiment, the second connection portion comprises a protrusion extending outwards from an outer side of the second engagement edge, and the protrusion of the second connection portion, the protrusion of the first connection portion form an interference fit so that the first and second casings 1 and 2 are detachably engaged.

Although several exemplary embodiments have been shown and described, it would be appreciated by those skilled in the art that various changes or modifications may be made in these embodiments without departing from the principles and spirit of the disclosure, the scope of which is defined in the appended claims and their equivalents.

## Claims

1. A seal device for sealing a connector, comprising:
a first casing including a first engagement edge;
a second casing including a second engagement edge, wherein the second casing and the first casing are engaged with each other at the first and second engagement edges to form an inner chamber for receiving a connector,
**characterized in that**
the first casing further includes a first connection portion extending from the first engagement edge, and the second casing further includes a second connection portion extending from the second engagement edge, wherein the first and second connection portions are detachably connected in a way that the connector is sealed in the inner chamber formed by the first casing and the second casing.

2. The seal device according to claim 1, **characterized in that**
the first connection portion and the second connection portion are connected in a snap-fit manner.

3. The seal device according to claim 2, **characterized in that**
the first connection portion comprises a male member, and the second connection portion comprises a female member, wherein the male member is adapted to be inserted into the female member and be detachably fastened within the female member.

4. The seal device according to claim 3, **characterized in that**
the female member is a frame having a hole therein, and an end of the male member is provided with a fixing retainer, wherein when the male member is inserted into the hole in the frame, the fixing retainer holds the male member in the frame.

5. The seal device according to claim 4, **characterized in that**
the fixing retainer has a stop surface substantially perpendicular to the inserting direction of the male member.

6. The seal device according to claim 5, **characterized in that**
the fixing retainer has a cross section substantially in a right-angled triangle shape.

7. The seal device according to claim 5, **characterized in that**
the male member is elastic.

8. The seal device according to any one of claims 1-7, **characterized in that**
a first side of the first casing and a first side of the second casing are integrally formed and connected in a rotatable way; and
the first engagement edge and the second engagement edge are formed respectively at second sides of the first and second casings opposite to the first sides.

9. The seal device according to any one of claims 1-7, **characterized in that**
each of the first casing and the second casing is formed therein a cavity;
each of the first casing and the second casing is formed with two arc recesses respectively at a third side and a fourth side perpendicular to the first and second sides,
wherein when the first casing and the second casing are closed, the cavities of the first and second casings are engaged to form the inner chamber for receiving the connector, and the corresponding arc recesses are engaged to form O-shaped openings for introducing spliced cables.

10. The seal device according to claim 9, **characterized in that**
arc elastic sealing pieces are provided at the arc recesses of the first and second casings respectively.

11. The seal device according to claim 9, **characterized in that**
the first casing and the second casing further comprise first elastic sealing pieces and second elastic sealing pieces respectively, and both the first elastic sealing pieces and the second elastic sealing pieces respectively protrude above the arc recesses provided at both sides of the first and second casings.

12. The seal device according to claim 2, **characterized in that**
the first connection portion comprises an extending piece extending perpendicularly from the first engagement edge, the extending piece being provided with a protrusion extending inwards;
the second connection portion comprises a groove extending inwards from an outer side of the second engagement edge;
the protrusion is configured to fit with the groove so that the protrusion is engaged within the groove when the first and second casings are closed.
